# EUROPEAN PATENT SPECIFICATION

(11) **EP 0 606 357 B1**
(45) Date of publication and mention of the grant of the patent: **11.12.1996**
(21) Application number: 92921136.5
(22) Date of filing: 29.09.1992
(51) Int. Cl.: A23L 1/325, A23B 4/06, A23B 4/08

(54) **THE TREATMENT OF MEAT**
BEHANDLUNG VON FLEISCH
TRAITEMENT DE LA VIANDE

(30) Priority: 01.10.1991 GB 9120867
(43) Date of publication of application: 20.07.1994
(73) Proprietor: SUN VALLEY POULTRY LIMITED, Hereford, Worchestershire HR4 9PB (GB)
(72) Inventor: CLARKE, Edward Thomas Little Fromington, Herefordshire HR1 3BT (GB); JULL, Harvey William Broadmead The Moor, Herefordshire HR1 3HT (GB); STOCK, Rebecca Susan Spring Cottage, Storridge Malvern WR13 5HD (GB)
(74) Representative: Lally, William
(86) International application number: GB9201780
(87) International publication number: WO9306750

(56) References cited:
- EP-A- 0 245 033
- DE-A- 3 402 611
- DE-B- 1 269 463
- FR-A- 2 520 589
- GB-A- 1 129 689
- GB-A- 1 222 684
- US-A- 3 211 086
- US-A- 3 370 960
- US-A- 4 474 823
- US-A- 4 714 618

## Description

This invention is concerned with improvements relating to the treatment of meat. The term meat is used herein generically as including animal meat (e.g. beef, lamb, pork, poultry) but excludes fish.

In the catering industry it is highly desirable to provide meat in the form of portions (conventionally termed "steaks") of predetermined size, i.e. having a predetermined cross-sectional area and thickness, to enable the portions to be cooked automatically, and to be charged for at a standard rate.

Conventionally steaks are provided by hand slicing a piece of meat or whole muscle across the grain: however for volume production it is in practical terms impossible to do this economically.

Suggestions have been made to provide blocks of meat in a desired form. For example, portions of meat may be minced and extruded at a temperature in the vicinity of freezing point (e.g. 0 to minus 4°C) in the form of a cylinder, which may then be sliced. The main disadvantage of this is that the texture of the reconstituted meat is different from that of a conventional steak, and this is readily apparent to a consumer.

Suggestions have been made for the processing of fish, involving the random arrangement of fillets in a container, freezing and then compressing the frozen fillets to a desired shape, which may subsequently be cut into portions (see for example US 4474823 and 3211086). However it has been found impossible to apply these known techniques to meat products without destroying the texture and/or flavour of the meat.

It is one of the various objects of this invention to provide for the provision of portions of meat of regular, predetermined size without any significant disruption to the structure of the meat.

According to this invention there is provided a method of providing a portion of meat of predetermined size, involving the steps:
[a] injecting a body of meat with an appropriate liquid;
[b] freezing the body of meat;
[c] pressing the frozen body into a desired shape under pressure; and
[d] slicing the frozen body into portions of desired size.

Advantageously the body of meat is injected with oil and water, preferably in the form of an emulsion, the oil conveniently being a butter oil or a butter-flavoured soya oil. If desired, other materials may be injected into the meat at this stage, including flavouring materials, such as salt, sugar, and/or flavour-enhancing materials.

Preferably the quantity of liquid injected into the body of meat falls within the range of 3% to 25% of the original weight of the body of meat, preferably within the range 5% to 20% and more preferably within the range 10% to 16%.

Preferably the body of meat is tenderised prior to freezing using blades which penetrate the connective tissue without significantly impairing the whole muscle nature.

Preferably prior to freezing, the body of meat is subjected to a process in which myosin is released, such as by subjecting the body of meat to a tumbling operation. In this manner, the injected fluid is caused to be dispersed generally uniformly around the body of meat, and in particular in the connected tissue between muscles.

Preferably the tumbling operation is carried out at a reduced pressure, preferably less than 3.3 x 10⁴Pa (i.e. a vacuum of greater than 20" Hg) and preferably at a pressure of less than 1.6 x 10⁴Pa (a vacuum greater than 25" Hg). In this manner tendency for air to remain in or become entrained within the body of meat is reduced.

The period for tumbling will vary with the nature of the meat, and the size of the portions. Where a large body of meat is utilised, and the requirement for the liberation of myocin is reduced, tumbling for a period of time within the range 30 minutes to 1 hour may be sufficient, whilst if several small pieces are utilised, which require to be adhered together in subsequent stages of the process, tumbling for a longer period of time may be desired, e.g. in the range 2 to 6 hours.

Preferably prior to the step of freezing, the body of meat muscle is formed generally into an initial shape in which the body of meat is retained during freezing. Preferably the initial forming involves placing the body of meat in a mould and applying a low pressure insufficient to cause any significant disruption of the muscle tissue of the body of meat, conveniently within the range 0.5 p.s.i. to 50 p.s.i. (3.45 x 10³Pa to 3.45 x 10⁵Pa) preferably within the range 1 p.s.i. to 10 p.s.i. (6.9 x 10³Pa to 6.9 x 10⁴Pa) advantageously between 3 p.s.i. and 8 p.s.i. (2.07 x 10⁴Pa to 5.52 x 10⁴Pa).

Preferably the initial forming operation is carried out above 0°C, conveniently at room temperature.

Preferably the step of freezing involves deep freezing, i.e. to a temperature of within the range -5°C to -20°C, preferably within the range -10°C to -15°C. Preferably the time taken in the freezing is such as to ensure that the frozen body of meat is mechanically rigid, substantially throughout. Desirably the speed of freezing is such as to reduce the size of ice crystals formed within the body of meat.

Conveniently the pressing process is carried out at high pressure, preferably within the range 500 p.s.i. to 10000 p.s.i. (3.45 x 10⁶Pa to 6.9 x 10⁷Pa) preferably in the range 750 p.s.i. to 4000 p.s.i. (5.17 x 10⁶Pa to 2.76 x 10⁷Pa). Preferably the pressure which is utilised, in relation to the temperature of the frozen block of meat, is such as to produce liquification of the ice within of the muscle tissue, allowing slippage of the muscle fibres across one another without any significant disruption of the muscle structure. On release of the high pressure the liquid re-freezes and the body of meat retains the shape into which it has been finally formed, this being assisted by the myocin released during tumbling. Advantageously the pressure is released relatively quickly, e.g. within 3 seconds, to ensure reduced ice-crystal growth during re-freezing.

Desirably the final shape of the block is that of a conventionally-sliced steak i.e. having at least one peripheral surface which is curved in a non-circular profile.

Preferably the low pressure forming is carried out in moulds and forms the body of meat into the shape close to the final, desired shape, differing therefrom preferably by no more than 5mm, preferably by 2mm or less. In this way the body of meat may be formed into its final shape with minimal impairment of the muscle structure, ensuring that the body of meat when formed and cooked retains the texture of a body of untreated meat.

The high pressure forming may be carried out in the same mould as the low pressure forming is carried out, but preferably on completion of freezing the body of meat is removed from the low-pressure forming mould and is subjected to the final high-pressure shaping operation at a later stage using a different mould.

A block of meat so treated is preferably whole muscle meat, i.e. a single muscle, and may be constituted from meat derived from a single animal carcase. Alternatively, and particularly in relation to smaller animals such as chicken, several portions of muscle meat derived from different animals of the same species may be frozen together to afford the block.

Conveniently subsequent to slicing, the slices are cooked, and re-cooled to provide a saleable food product, conveniently being sold in a sealable bag or pouch. Thus, subsequent to slicing, the slices may be placed in heat-processable plastic bags, which are then vacuum sealed, prior to cooking.

There will now be given a detailed description, to be read with reference to the accompanying drawings, of a preferred embodiment which has been selected for the purposes of illustrating the invention by way of example.

In the accompanying drawings:

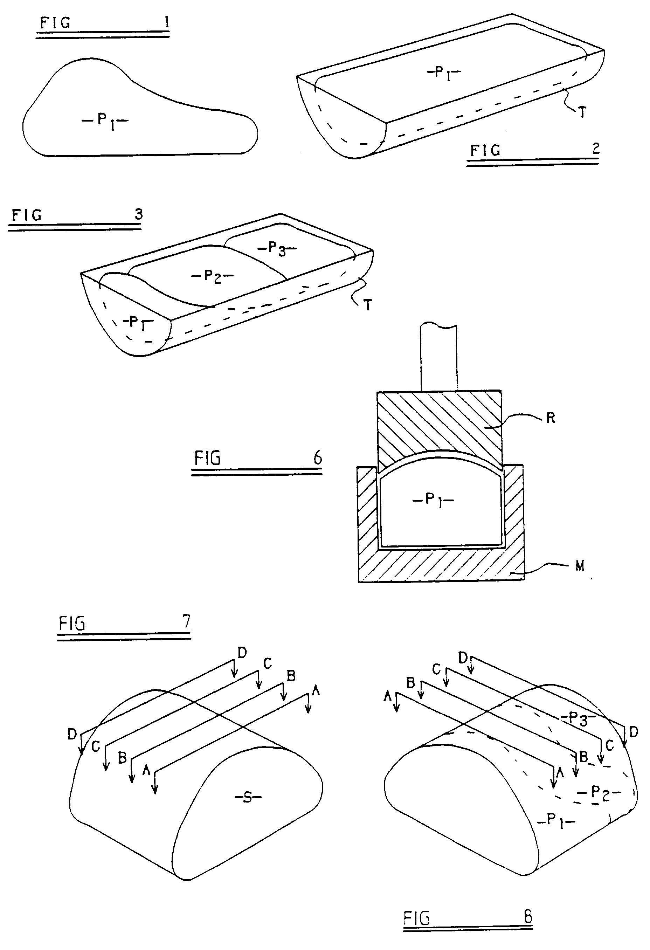

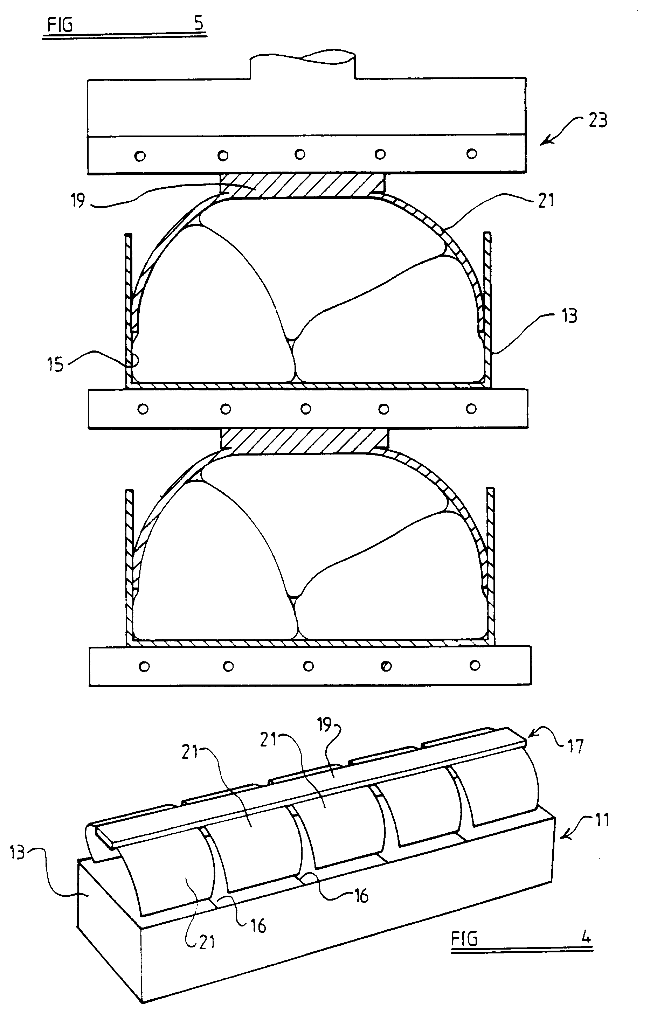

Figures 1 and 2 show stages in a low pressure forming operation;
Figure 3 shows a low pressure forming operation utilising several portions of meat;
Figures 4 and 5 show an alternative arrangement for low pressure forming;
Figure 6 illustrates a high pressure forming mould; and
Figures 7 and 8 illustrate the cutting of a formed block into individual steaks.

The preferred embodiments of the invention are methods for the provision of steaks of meat of generally predetermined size and weight, involving the formation of a block or slab of meat of uniform cross-section, whereby, when the block or slab is sliced at constant thickness, a steak of uniform, predetermined size and thickness is produced, having been sliced across the grain.

### EXAMPLE 1

In the performance of the first embodiment, a portion P1, of whole, single muscle meat derived from turkey is injected with an emulsion of butter oil and water, conveniently also containing salt, sugar and emulsifier, in an amount approximately 15% by weight of meat. The body was then tenderised, and subjected to a tumbling operation at 6 rpm for a period of 40 minutes at a pressure of 1.5 x 10⁴Pa. The portion is then placed in a tray T, and conformed to a generally rectangular shape and frozen to a temperature of minus 18°C into a condition in which the portion is mechanically rigid. The block produced by freezing the portions P1 may then be removed from the tray T, and bagged and retained frozen until desired for further use.

The partially-formed portion thus provided is placed in a high pressure mould (Figure 6) in which it is formed into a final desired shape, whilst retained at its low temperature, at a high pressure of between 500 and 10,000 p.s.i., preferably between 1,000 and 5,000 p.s.i., for a period of about 7.5 seconds. Whilst the high pressure is applied to the portion, the liquid de-freezes, particularly at the interface of the muscle tissue, allowing the muscle tissues to slip one across the other, conforming the portion to the shape of the mould without any significant disruption of the muscle tissue. Desirably the change in shape produced by the high pressure forming stage is not great, and preferably involves a movement of no more than 5mm of any part of the meat, and preferably less than that, e.g. 2mm. On release of pressure there is an immediate re-freezing of the liquid within the body, and because of the speed of re-freezing, this results in the formation of very small ice crystals.

On conclusion of the pressing operation the block is removed from the high pressure mould, and is then subjected to a slicing operation (shown in Figure 7) during which it is sliced in planes AA, BB, CC, etc. to produce portions of meat in the form of steaks having the uniform cross section as shown in Figure 7 (i.e. the shape of the high pressure mould) and having a thickness determined by the thickness of the cut.

The slicing operation may be carried out at a temperature raised somewhat about the -18°C at which the moulding operation takes place, but preferably slicing is carried out without any elevation in temperature being effected.

The slices may then be vacuum sealed in individual bags, and retained chilled or frozen until the product is cooked.

Alternatively the steak may be cooked directly after being sliced, whilst in an individual pack, such as in a continuous oven or in a water bath, and frozen again or chilled, being reheated prior to being consumed, such as in a clam-shell heater to impart an aesthetically pleasing colour to the surface of the steak.

In either event, during cooking of the steak, the shape relaxes, and the steak adopts the form of a conventional whole-muscle steak.

### EXAMPLE 2

Portions of whole muscle turkey meat were first injected with a marinade solution to approximately 16% of their original weight, with the brine composition comprising 77.9% water, 6.7% salt, 6.7% soya oil, 7.2% turkey flavour (salt, wheat starch, chicken fat, beef extract and alpha tocopherol, and 1.5% sodium caseinate, said percentages being by weight. An injector equipped with bayonet-typed tenderising needles was used to effect tenderising of the meat.

The injected/tenderised portions were tumbled under a low pressure of 1.5 x 10⁴Pa or lower for 5 hours at 6 rpm. The tumbled portions were separated and graded into various weight categories to accommodate various sizes of moulds.

A mould assembly is used, comprising a base member 13 in the form of an open-topped box, divided into said compartments 15 by lateral partitions 16, and a presser member 17 comprising a top plate 19 connecting a plurality of dome-shaped presser elements 21 shaped to fit into the compartments 15 (see Figures 4 and 5). The graded portions are fitted into the moulds in close proximity to fill the moulds, with care being taken to ensure alignment of the grain of the portions. A plurality of filled mould assemblies were placed into a plate-freezer 23, and subjected to a relatively low pressure of between 1 and 5 p.s.i. to conform the portions to the shape of the compartments without causing any significant disruption of the muscle tissue and reduced in temperature by the plate-freezer to a temperature of about -18°C (0°F) over a period of about 4 hours.

The partially-formed portions of Example 2 are placed in a high pressure mould (Figure 6) in which they are formed into a final desired shape, whilst retained at its low temperature at a high pressure of between 500 and 10,000 p.s.i. (3.45 x 10⁶ to 6.9 x 10⁷Pa) preferably about 3,000 p.s.i., for a period of about 7.5 seconds.

During high pressure forming the liquid, particularly at the interface of the muscle tissue, unfreezes, allowing the muscle fibres to slip relative to one another as the portion is deformed into its a final, desired shape. However it is to be appreciated that desirably final shaping involves only a relatively small movement (e.g. less than 5mm) from the initially formed shape, otherwise disruption to the muscle fibres may occur which will provide an impairment in the quality of the meat.

The greater amount of myocin released by the increased tumbling period to which the portions of Example 2 are subjected, compared with the larger portions of Example 1, ensures a firm bond between adjacent portions of meat, and assists the body of meat to behave as a single body of whole muscle meat during subsequent treatment.

The following stages to which the portions of Example 2 are subject are similar to those set out in relation to Example 1.

### EXAMPLE 3

Example 3 is similar in general terms to Example 2 above, but describes the invention in relation to red meat, specifically beef.

Top loin and clod (chuck) portions of beef, all weighing between 2.5 and 2.7 pounds, were tenderised and subsequently injected with a brine solution. The brine composition was 82.5 wt % water, 5.8% salt, 3.5% dextrose, 1.5% sodium caseinate, and 6.7% soy oil. The roasts were then tumbled for 40 minutes at 6 rpm under 26" Hg vacuum. The portions were then placed in a mould and formed generally to the shape of the mould under a relatively low pressure of 5 p.s.i., and whilst retained in the mould were subjected to a temperature of -15°C until they were rigid throughout. While rigidly frozen, the portions were transferred to a high pressure mould and pressed for seven seconds at 1000 p.s.i., the portions being conformed to the shape of the high pressure mould. The portions were then sliced into steaks to a thickness of 0.69 inches (15mm), into an average of 13 steaks per portion.

The steaks were broiled and yielded a cooked product that was very juicy and had great flavour.

Whilst the invention has been described above primarily in relation to white meat (poultry or chicken) and beef, it is of course to be appreciated that the invention has similar applicability to other meat, such as pork, lamb, etc.

## Claims

1. A method of providing a portion of meat (excluding fish) of predetermined size, involving the steps:
[a] injecting a body of meat with an appropriate liquid;
[b] freezing the body of meat;
[c] pressing the frozen body into a desired shape under pressure; and
[d] slicing the frozen body into portions of desired size.

2. A method according to Claim 1 wherein the body of meat is injected with a liquid comprising water, oil (preferably butter oil) and/or flavour enhancing materials.

3. A method according to any one of the preceding claims wherein the body of meat is tenderised prior to freezing.

4. A method according to any one of the preceding claims wherein, prior to the step of freezing, the body of meat is formed generally into an initial shape in a mould in which the body of meat is retained during freezing.

5. A method according to Claim 4 wherein said forming operation involves subjecting the body of meat to a pressure within the range 3.45 x 10³ Pa to 3.45 x 10⁵ Pa (0.5 to 50 p.s.i.), preferably 6.9 x 10³ Pa to 6.9 x 10⁴ Pa (1 to 10 p.s.i.).

6. A method according to any one of the preceding claims wherein the step of freezing involves deep freezing to a temperature within the range -5°C to -20°C to the point at which the body of meat is substantially wholly rigid mechanically rigid.

7. A method according to any one of the preceding claims wherein the pressing process is carried out at a pressure of between 3.45 x 10⁶ Pa to 6.9 x 10⁷ Pa (500 p.s.i. and 10000 p.s.i.), preferably in the range of 5.17 x 10⁶ Pa to 2.76 x 10⁷ Pa (750 p.s.i. to 4000 p.s.i.).

8. A method according to any one of the preceding claims wherein the body of meat is pressed into the shape of a conventionally-sliced steak.

9. A method according to any one of the preceding claims wherein the body of meat is whole muscle meat derived from a single animal carcase.

10. A method according to any one of Claims 1 to 9 wherein the body of meat is derived from several portions of muscle meat derived from different animals of the same species.

11. A method according to any one of the preceding claims wherein subsequent to slicing, the slices are cooked, and re-cooled to provide a saleable product.

12. A meat steak (excluding fish), the steak having been produced by a method of involving steps of
(a) injecting a body of meat with a liquid comprising oil and water;
(b) forming the body of meat into an initial shape;
(c) freezing the body of meat to a temperature at which it is mechanically rigid;
(d) pressing the frozen body into a desired shape under pressure such that ice in the body of meat liquifies and the muscle fibres of the body of meat are allowed to slip across one another without any significant disruption of the muscle structure;
(e) releasing the pressure applied at step (d) to cause the liquified ice to re-freeze; and
(f) slicing the frozen body into portions of desired size,
the meat steaks being characterised by the absence of any significant disruption to the muscle tissue, and the absence in the frozen portion of any large ice crystals.

## Patentansprüche

1. Verfahren zum Bereitstellen einer Fleischportion (ausgenommen Fisch) mit vorbestimmter Größe, mit den Schritten:
(a) Einspritzen einer geeigneten Flüssigkeit in einen Fleischkörper;
(b) Gefrieren des Fleischkörpers;
(c) Pressen des gefrorenen Körpers unter Druck in eine gewünschte Form; und
(d) Aufschneiden des gefrorenen Körpers in Portionen gewünschter Größe.

2. Verfahren nach Anspruch 1, dadurch gekennzeichnet, daß eine Flüssigkeit, umfassend Wasser, Öl (vorzugsweise Butteröl) und/oder Geschmacksverstärker, in den Fleischkörper eingespritzt wird.

3. Verfahren nach einem der vorangehenden Ansprüche, dadurch gekennzeichnet, daß der Fleischkörper vor dem Gefrieren zart gemacht wird.

4. Verfahren nach einem der vorangehenden Ansprüche, dadurch gekennzeichnet, daß der Fleischkörper vor dem Schritt des Gefrierens im allgemeinen in einer Form in eine Ausgangsform gebracht wird, in der der Fleischkörper während des Gefrierens gehalten wird.

5. Verfahren nach Anspruch 4, dadurch gekennzeichnet, daß der Formvorgang beinhaltet, daß der Fleischkörper einem Druck innerhalb des Bereichs von 3,45 x 10³ Pa bis 3,45 x 10⁵ Pa (0,5 bis 50 psi), vorzugsweise 6,9 x 10³ Pa bis 6,9 x 10⁴ Pa (1 bis 10 psi) ausgesetzt wird.

6. Verfahren nach einem der vorangehenden Ansprüche, dadurch gekennzeichnet, daß der Schritt des Gefrierens ein Tiefgefrieren auf eine Temperatur innerhalb des Bereichs von -5°C bis -20°C bis zu dem Punkt beinhaltet, an dem der Fleischkörper in wesentlichen vollständig mechanisch fest ist.

7. Verfahren nach einem der vorangehenden Ansprüche, dadurch gekennzeichnet, daß der Preßvorgang bei einem Druck von zwischen 3,45 x 10⁶ Pa bis 6,9 x 10⁷ Pa (500 psi und 10.000 psi), vorzugsweise im Bereich von 5,17 x 10⁶ Pa bis 2,76 x 10⁷ Pa (750 psi bis 4.000 psi) ausgeführt wird.

8. Verfahren nach einem der vorangehenden Ansprüche, dadurch gekennzeichnet, daß der Fleischkörper in die Form eines in herkömmlicher Weise geschnittenen Steaks gepreßt wird.

9. Verfahren nach einem der vorangehenden Ansprüche, dadurch gekennzeichnet, daß der Fleischkörper aus Fleisch eines ganzen Muskels besteht, das von einem einzelnen Tierkörper stammt.

10. Verfahren nach einem der Ansprüche 1 bis 9, dadurch gekennzeichnet, daß der Fleischkörper aus mehreren Muskelfleischportionen besteht, die von unterschiedlichen Tieren der gleichen Art stammen.

11. Verfahren nach einem der vorangehenden Ansprüche, dadurch gekennzeichnet, daß die Scheiben nach dem Schneiden gekocht und abgekühlt werden, um ein verkaufsfähiges Produkt bereitzustellen.

12. Fleischsteak (ausgenommen Fisch), das durch ein Verfahren mit folgenden Schritten hergestellt ist:
(a) Einspritzen einer Wasser und Öl enthaltenden Flüssigkeit in einen Fleischkörper;
(b) Verformen des Fleischkörpers in eine Ausgangsform,
(c) Gefrieren des Fleischkörpers auf eine Temperatur, bei der dieser mechanisch fest ist;
(d) Pressen des gefrorenen Körpers unter Druck in eine gewünschte Form, so daß sich Eis innerhalb des Fleischkörpers verflüssigt und die Muskelfasern des Fleischkörpers aufeinander gleiten können, ohne daß eine wesentliche Störung der Muskelstruktur auftritt;
(e) Entlasten des bei Schritt (d) aufgebrachten Drucks, wodurch ein erneutes Gefrieren des verflüssigten Eises bewirkt wird; und
(f) Schneiden des gefrorenen Körpers in Portionen gewünschter Größe, wobei die Fleischsteaks durch das Fehlen einer jeglichen wesentlichen Störung des Muskelgewebes sowie des Fehlen großer Eiskristalle in der gefrorenen Portion gekennzeichnet sind.

## Revendications

1. Procédé consistant à fournir une portion de viande (à l'exclusion du poisson) de dimension prédéterminée, comprenant les étapes consistant à :
(a) injecter à un corps de viande un liquide approprié ;
(b) congeler le corps de viande ;
(c) compresser le corps congelé en une forme souhaitée sous pression ; et
(d) couper on tranches le corps congelé en des portions de dimension souhaitée.

2. Procédé solon la revendication 1, dans lequel on injecte au corps de viande un liquide comprenant de l'eau, de l'huile (de préférence de l'huile de beurre) et/ou des exhausteurs de goût.

3. Procédé selon l'une quelconque des revendications précédentes, dans lequel on attendrit le corps de viande avant la congélation.

4. Procédé selon l'une quelconque des revendications précédentes, dans lequel, avant l'étape de congélation, le corps de viande est façonné de façon générale en une forme initiale dans un moule, forme en laquelle le corps de viande est maintenu lors de la congélation.

5. Procédé selon la revendication 4, dans lequel ladite opération de façonnage comprend l'étape consistant à soumettre le corps de viande à une pression comprise dans la gamme de 3,45 x 10³ Pa à 3,45 x 10⁵ Pa (de 0,5 à 50 p.s.i.) et de préférence de 6,9 x 10³ Pa à 6,9 x 10⁴ Pa (1 à 10 p.s.i.).

6. Procédé selon l'une quelconque des revendications précédentes, dans lequel l'étape de congélation comprend la surgélation à une température comprise dans la gamme de -5°C à -20°C au point où le corps de viande est sensiblement totalement rigide, mécaniquement rigide.

7. Procédé selon l'une quelconque des revendications précédentes, dans lequel on met en oeuvre le procédé de compression à une pression comprise entre 3,45 x 10⁶ Pa et 6,9 x 10⁷ Pa (entre 500 p.s.i. et 10 000 p.s.i.) et de préférence comprise dans la gamme de 5,17 x 10⁶ Pa à 2,76 x 10⁷ Pa (de 750 p.s.i. à 4 000 p.s.i.).

8. Procédé selon l'une quelconque des revendications précédentes, dans lequel on compresse le corps de viande en la forme d'un steak coupé en tranches de façon classique.

9. Procédé selon l'une quelconque des revendications précédentes, dans lequel le corps de viande est de la viande de muscle entier provenant d'une seule carcasse d'animal.

10. Procédé selon l'une quelconque des revendications 1 à 9, dans lequel le corps de viande provient de plusieurs portions de viande de muscle provenant de différents animaux de la même espèce.

11. Procédé selon l'une quelconque des revendications précédentes, dans lequel, à la suite de la découpe en tranches, les tranches sont cuites et de nouveau refroidies pour fournir un produit vendable.

12. Steak de viande (à l'exclusion du poisson), le steak ayant été produit par un procédé comprenant les étapes consistant à :
(a) injecter à un corps de viande un liquide comprenant de l'huile et de l'eau ;
(b) façonner le corps de viande en une forme initiale ;
(c) congeler le corps de viande à une température à laquelle il est mécaniquement rigide ;
(d) compresser le corps congelé en une forme souhaitée sous une pression telle que la glace du corps de viande se liquéfie et les fibres musculaires du corps de viande peuvent glisser les unes par rapport aux autres de façon transversale sans rupture significative de la structure de muscle ;
(e) libérer la pression appliquée à l'étape (d) pour provoquer une nouvelle congélation de la glace liquéfiée ; et
(f) couper en tranches le corps congelé en dos portions de dimension souhaitée,
les steaks de viande étant caractérisés par l'absence d'une rupture significative du tissu musculaire et par l'absence dans la portion congelée de grands cristaux de glace.
